# EUROPEAN PATENT SPECIFICATION

(11) **EP 0 567 281 B1**
(45) Date of publication and mention of the grant of the patent: **06.08.1997**
(21) Application number: 93303006.6
(22) Date of filing: 19.04.1993
(51) Int. Cl.: G02F 1/1335

(54) **Liquid crystal display**
Flüssigkristall-Anzeigevorrichtung
Afficheur à cristal liquide

(30) Priority: 22.04.1992 JP 103144/92
(43) Date of publication of application: 27.10.1993
(73) Proprietor: International Business Machines Corporation, Armonk, N.Y. 10504 (US)
(72) Inventor: Koseki, Toshihiko, Yokohama-shi, Kanagawa-ken (JP); Fukunaga, Tetsuya, Motosu-gun, Gifu-ken (JP); Takano, Hideo, Atsugi-shi, Kanagawa-ken (JP); Yamanaka, Hidemine, Yamato-shi, Kanagawa-ken (JP)
(74) Representative: Burt, Roger James, Dr.

(56) References cited:
- DE-A- 3 401 423
- PATENT ABSTRACTS OF JAPAN vol. 14, no. 25 (P-991)(3968) 18 January 1990&JP-A-01 266 512
- PATENT ABSTRACTS OF JAPAN vol. 16, no. 143 (P-1335)9 April 1992 &JP-A-04 001 726

## Description

The invention relates to liquid crystal display (LCD) devices.

A light shielding layer referred to as a black matrix is customarily provided in an LCD device to prevent incident light from affecting photosensitive parts of the device and reducing the contrast of the display. The light shielding layer is so designed as to expose only display area of display electrodes to improve the contrast of a displayed image. The LCD device has first and second transparent insulating substrates, such as glass, spaced from each other, and liquid crystal material contained in the space. In a typical thin film transistor (TFT) type LCD device, the light shielding layer is formed on the first substrate, then a common electrode of Indium Tin Oxide (ITO) is formed, and an orientating layer, such as polyimide, is formed. A thin metal layer, such as Cr, can be used as the light shielding layer since the entire common electrode is maintained at a fixed reference potential.

On the second substrate, horizontal metal gate lines and vertical metal data lines are formed. At each crosspoint of the gate and data lines, a display cell is formed which includes the TFT and the display electrode of the ITO. A passivation layer and an orientating layer are also formed on the structure. Polarizers are arranged outside the first and second substrates, and a light source is provided to project the light to the LCD device. A data line driver and a gate line driver connected to the data and gate lines, respectively are selectively activated to apply a voltage to the liquid crystal between selected display electrodes and the common electrode to display an image. Since the light shielding layer is formed on the first substrate, called as a common electrode substrate, and the display electrodes are formed on the second substrate, called as a TFT substrate, both the substrates must be carefully assembled to align apertures of the light shielding layer with the display electrodes.

To solve the problem, it has been proposed to form the light shielding layer on the TFT substrate, but this raises the following additional problem: The metal light shielding layer on the TFT substrate presents an undesirable capacitance effect in conjunction with the passivation layer and the other conductive elements, such as the data and gate lines.

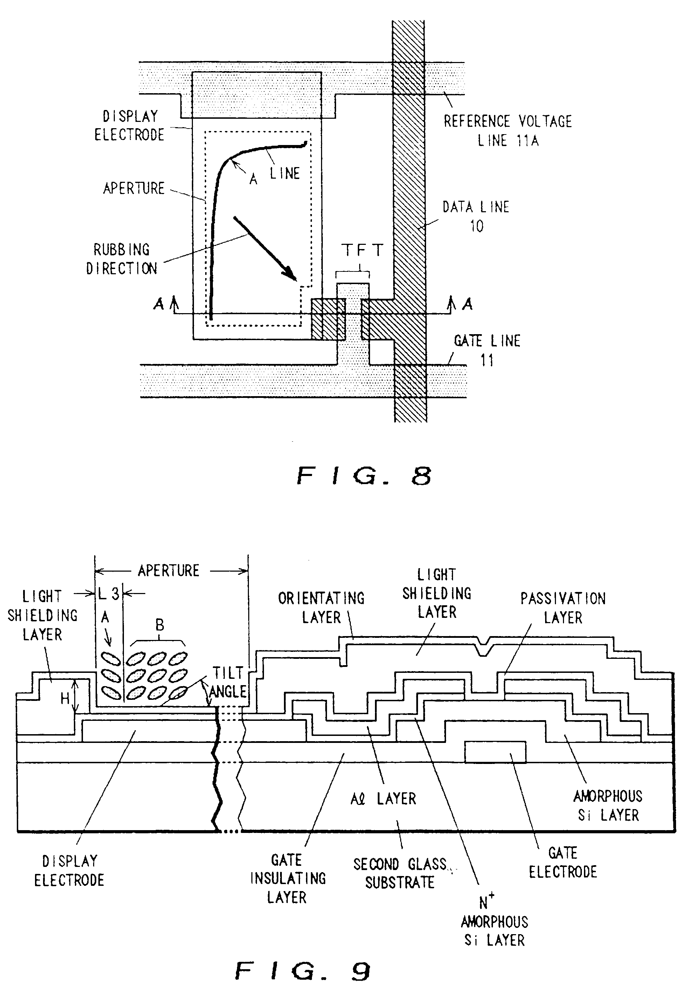

To avoid this additional problem, an insulator, such as photoresist material, may be used as the light shielding layer on the TFT substrate. To realize an optical density which is required to sufficiently shield or block the light, a thick photoresist layer is required. Fig.8 shows a plan view of the resulting cell and Fig.9 shows a crosssectional structure on the second glass substrate view at A-A in Fig.8. The first glass substrate is not shown in Fig.9. The gate line or electrode is formed on the second glass substrate. A gate insulating layer is formed, an amorphous Si layer which operates as a channel region of the TFT is formed, and a display electrode of ITO is formed. An N⁺ amorphous Si layer and an Al layer are formed on the amorphous Si layer to form a drain electrode at the right side of the channel of the TFT and a source electrode at the left side. The drain region is extended from the data line, and the source electrode is connected to the display electrode. A passivation layer is formed to cover the structure. Next, the thick black photoresist layer or light shielding layer is formed to expose the display electrode. An orientating layer is formed on the entire structure which, as well known in the art, is rubbed in one direction, as shown in Fig.8, to align liquid crystal molecules in the one direction when no voltage is applied. While all the liquid crystal molecules should be aligned in the same direction, as shown by the liquid crystal molecules B, those liquid crystal molecules A near to the edge of the aperture of the light shielding layer located upstream of the rubbing direction tend to tilt in the reverse direction, as shown in Fig.9, a phenomenon called reverse tilt. The reverse tilt occurs due to the large step H which is caused by the thick photoresist layer. Fig.10 shows a simplified structure of the aperture of Fig.9, without the passivation layer and the orientating layer. The reverse tilt occurs in an area defined by L located upstream of the rubbing direction. A boundary between the normal tilt region and the reverse tilt region is called a reverse tilt disclination line. The light from the light source passes through the liquid crystal along the reverse tilt disclination line. A line shown in the Fig.8 shows the continuous reverse tilt disclination line appearing along the upper side edge and the left side edge of the aperture which are located at the upper stream of the rubbing direction when no voltage is applied across the liquid crystal.

The reverse tilt disclination line raises a problem when the LCD device is operated in a normal white mode. In the normal white mode, the polarizers are crossed and the liquid crystal molecules are twisted. When no voltage is applied across the liquid crystal, the light from the light source passes through the LCD device, whereby the white color is displayed. When the voltage is applied, the light is blocked by the polarizers, and the black color is displayed. However, if the reverse tilt occurs when the voltage is applied, the light from the light source passes through the reverse tilt disclination line, so that a white line appears in the black image, which degrades the contrast and increases an afterimage or residual image effect. The display quality is thus markedly degraded by reverse tilt.

Japanese patent application 63-162521 (Published Unexamined Patent Application 02-13927) solves the reverse tilt occurring at corner portions of a rectangular display electrode of the LCD device by enlarging the corner portions of the display electrode, whereby the reverse tilt occurs in the enlarged areas of the display electrode.

The present invention deals with the reverse tilt caused by the use of the thick light shielding layer on the TFT substrate in a way that avoids the necessity for such enlarged areas.

According to the invention there is provided a liquid crystal display device comprising first and second transparent insulating substrates and liquid crystal material retained therebetween; said first substrate having a common electrode formed thereon; said second transparent insulating substrate having formed thereon gate lines in a first direction, data lines in a second direction intersecting said first direction, an array of thin film transistors and display electrodes, one thin film transistor and one display electrode being located at each crosspoint of said gate and data lines, a light shielding structure apertured to expose a display area at each display electrode, and an orientating layer which is rubbed in a rubbing direction; said device being characterised in that at each display area said light shielding structure comprises a thick layer and a thin layer, said thick layer being of a thickness that causes reverse tilt of the liquid crystal molecules located at a corresponding step formed in the orientating layer at an edge of said thick layer, said thin layer being of a thickness sufficiently thin so as to avoid causing reverse tilt of the liquid crystal molecules located at a corresponding step formed in the orientating layer at an edge of said thin layer, said thin layer being formed at an edge of the display electrode upstream of the rubbing direction of said device to define a boundary of the aperture, said thick layer being formed on part of said thin layer and spaced from said boundary such that the remaining part of said thin layer can block light from liquid crystal molecules located above it which have been reverse tilted at said edge due to the thick layer.

The thin light shielding layer blocks light passing through reverse tilted liquid crystal molecules.

A thickness of the thin light shielding layer is preferably equal to or less than 0.5µm.

In a preferred embodiment of the invention the thin light shielding layer is a metal layer and the thick light shielding layer is a black photoresist layer.

The metal layer may be formed from the metal used for the gate line or the metal used for the data line.

The photoresist layer may include blue pigments, yellow pigments and violet pigments, and may further include red pigments.

In order that the invention may be well understood, embodiments thereof will now be described with reference to the accompanying drawings, in which:

Fig.1 shows the structure of the display electrode and the thin and thick light shielding layers of the present invention.

Fig.2 shows the first embodiment of the present invention.

Fig.3 shows the circuit of the liquid crystal display cell.

Fig.4 shows the second embodiment of the present invention.

Fig.5 shows the third embodiment of the present invention.

Fig.6 shows the fourth embodiment of the present invention.

Fig.7 shows the fifth embodiment of the present invention.

Fig.8 shows the plan view of the liquid crystal display cell the image of which is degraded by the reverse tilt.

Fig.9 shows the cross section along line A-A in the Fig.8.

Fig.10 shows the display electrode of the structure shown in the Fig.9.

The liquid crystal display device includes first transparent insulating substrate, such as glass plate, second transparent insulating substrate, such as glass plate, and liquid crystal material of a positive dielectric anisotropy retained between the first and second substrates. The first substrate has a common electrode and an orientating layer. The second substrate has gate lines extended in a horizontal direction, data lines extended in a vertical direction and liquid crystal display cell each formed at a crosspoint of the gate and data lines. The liquid crystal display cell includes a thin film transistor and a display electrode. An exposed area, defined by the aperture of the display electrode is defined as a picture element (pel). The surface of the structure of the second substrate is coated by an orientating layer. The orientating layer of the first substrate is rubbed in first direction and the orientating layer of the second substrate is rubbed in second direction intersecting the first direction, whereby the liquid crystal molecules are twisted by 90 degrees.

The detail of the structure of the first substrate is not described and not shown in the figures, since it is well known in the art.

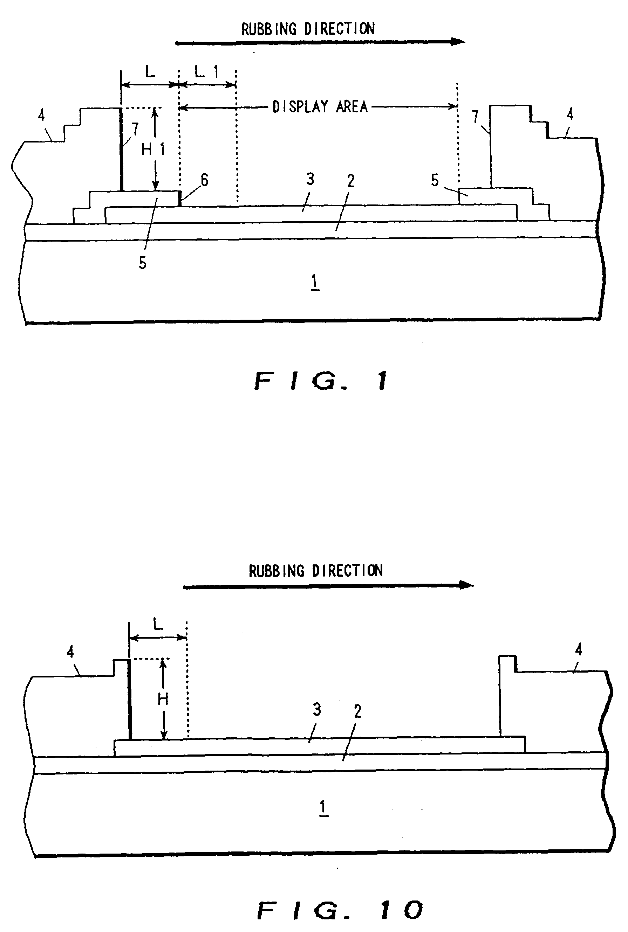

Fig.1 shows a simplified structure of the display electrode on the second substrate. The gate insulating layer 2, the display electrode (ITO) 3, a thin light shielding layer 5 and a thick black photoresist layer 4, i.e. the thick light shielding layer, are formed on the glass substrate 1.

In accordance with the present invention, the thin light shielding layer 5 and the thick black photoresist layer 4 are formed at a peripheral of the display electrode 3, which is located upstream of a rubbing direction. Due to a height H1 from the surface of the thin light shielding layer 5 to the top of the thick black photoresist layer 4, the reverse tilt occurs in the portion represented by L. The distance L is 5-10µm. The purpose of the thin light shielding layer 5 is to prevent the light from passing through the reverse tilted liquid crystal molecules in the portion L. However, if a thickness of the light shielding layer 5 is large, the reverse tilt occurs in a portion L1. The inventors of the present invention have found that the reverse tilt does not occur in the portion L1 if the thickness of the light shielding layer 5 is equal to or less than 0.5µm, and that the material satisfying the above two conditions, i.e. the light blocking capability and the thickness equal to or less than 0.5µm, exists in the LCD device as the gate line or data line. Examples of the thickness of the gate and data lines are 3000 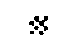 and 4500 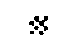 , respectively. The use of the metal material for the gate and data lines as the thin light shielding layer 5 has the following additional effects. That is, the thin light shielding layer 5 can be simultaneously formed with the formation of the gate or data lines. In other words, the thin light shielding layer 5 can be formed without increasing the number of fabricating steps of the LCD device.

For the reasons described above, the light shielding layer of the edge of the display area, located at the upper stream of the rubbing direction, comprises the thin light shielding layer 5 formed at the peripheral of the display electrode 3 for defining the edge 6 of the aperture, and the thick black photoresist layer or thick black photopolymer 4, the edge 7 of which is positioned on the thin light shielding layer 5. The edge 6 and the edge 7 are separated from each other by the distance L.

The thin light shielding layer 5 is required to be formed at the edge of the aperture located upstream of the rubbing direction to solve the reverse tilt.

However, it is preferable to form the thin light shielding layer 5 at the edges located downstream of the rubbing direction, as shown in the Fig.1, since it is desired that all the liquid crystal display cells have the same aperture ratio. The aperture ratio means the ratio of an area through which the light passes to a total area of the liquid crystal display cell.

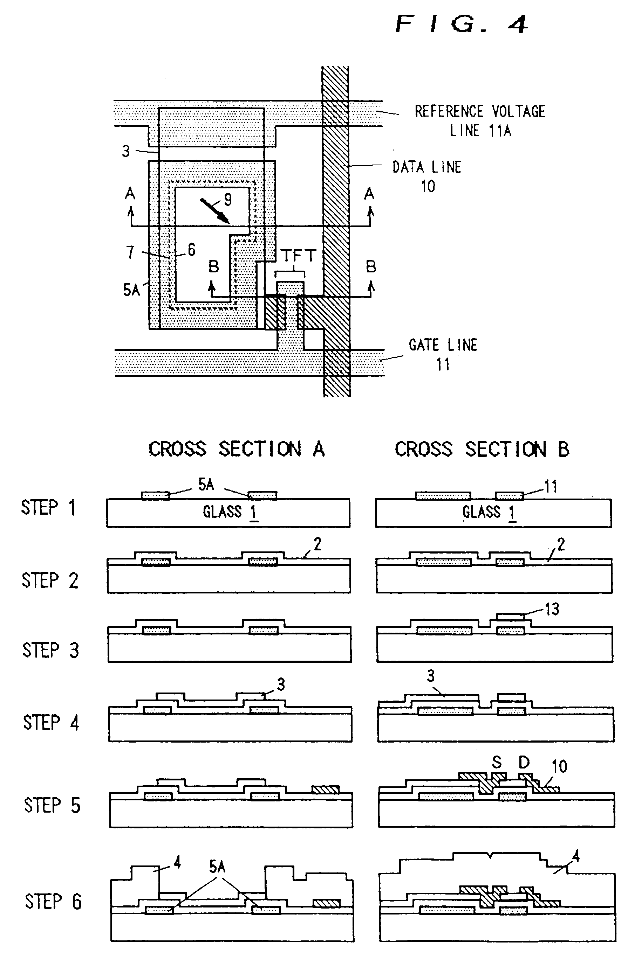

Although the thin light shielding layer 5 is formed on the display electrode 3 in the Fig.1, the layer 5 is also formed below the display electrode 3, as described with respect to the Figs.4-7.

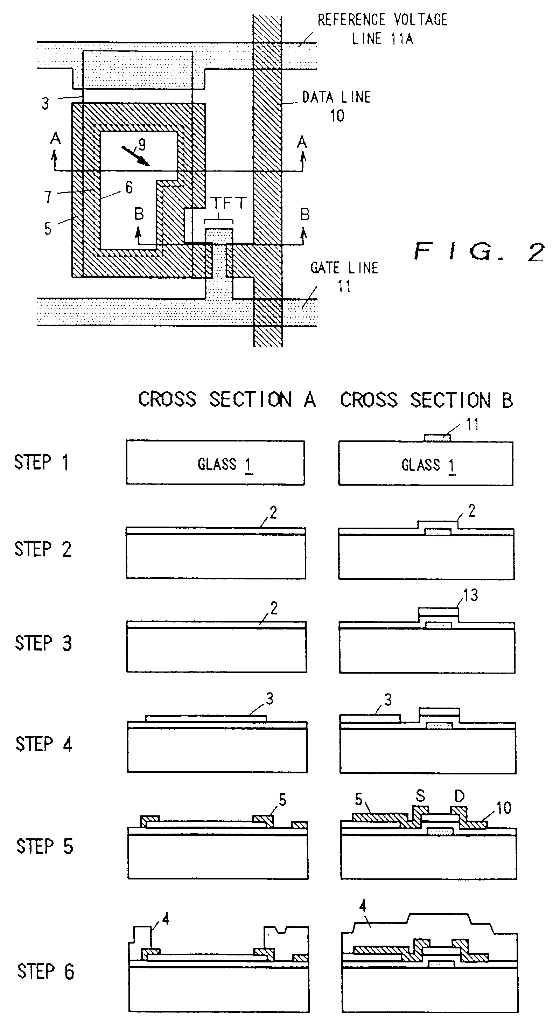

Fig.2 shows first embodiment of the present invention in which the thin light shielding layer 5 is formed by the metal layer used for the data line.

A plan view in the Fig.2 shows a display cell at a crosspoint of the data line and the gate line. The right-side up hatching lines represent the metal layer used for the gate line, and the left-side up hatching lines represent the metal line used for the data line. The display cell includes the TFT and the transparent display electrode 3, such as ITO. The aperture of the display electrode 3 is defined by the light shielding layer 5 of the data line 10. The arrow 9 indicates the rubbing direction. The Fig.2 also shows cross-sections viewed at lines A-A and B-B in each fabricating step.

Describing the fabricating steps, in a step 1, a metal layer 11, such as Al, Ti, Cu, Mo, Cr, Ta etc., is deposited on the glass substrate 1 by a sputtering process. The gate line 11 and a reference voltage line 11A, shown in the plan view are formed by an usual selective etching process using a photoresist.

In a step 2, a transparent insulating layer 2, such as SiOx, SiNx, is deposited on an entire surface of the structure by a chemical vapor deposition (CVD) process.

In a step 3, an intrinsic amorphous Si layer is deposited on the structure by the CVD process, and is selectively etched to form an active or channel region 13 of the TFT.

In a step 4, a transparent conductive layer, such as Indium Tin Oxide (ITO), is deposited on the structure, and is selectively etched to form the display electrode 3.

In a step 5, a metal layer 5, such as Al, Ti, Cu, Mo, Cr, Ta etc., is deposited on the structure, and is selectively etched to form the thin light shielding layer 5, the data line 10, and source (S) and drain (D) electrodes of the TFT.

In a step 6, the black photoresist layer 4 of low transmittance is deposited on the structure by a spin coating technology, and is selectively etched to form the structure shown in the Fig.1. The black photoresist layer 4 is a negative photoresist wherein an exposed portion by a light source is not dissolved by a developing agent and an unexposed portion is dissolved.

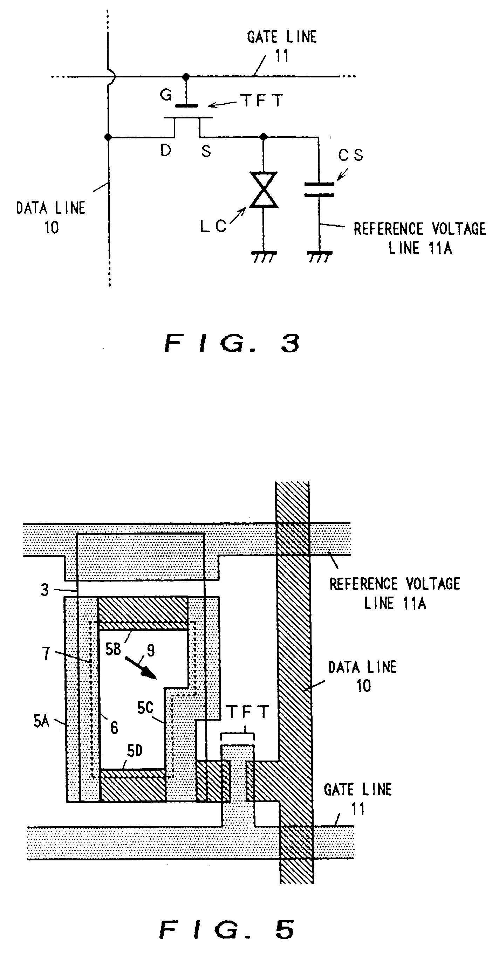

Fig.3 shows an equivalent circuit of the liquid crystal cell shown in the Fig.2, well known in the art. A portion of the display electrode which overlaps with the reference voltage line 11A, the insulating layer 12 and the reference voltage line 11A in the Fig.2 form a storage capacitor CS in the Fig.3. The storage capacitor CS stores electric charges during one frame period of the LCD device, as well known in the art.

Fig.4 shows second embodiment of the present invention in which the thin light shielding layer 5 is formed by the metal material used for the gate line.

A plan view in the Fig.4 shows the display cell at the crosspoint of the data line 10 and the gate line 11. The equivalent circuit of the cell is shown in the Fig.3. The Fig.4 also shows cross-sections viewed at lines A-A and B-B in each fabricating step. The arrow 9 shows the rubbing direction.

Describing the fabricating steps, in a step 1, the metal layer is deposited on the entire surface of the glass substrate 1, and is selectively etched to form the gate line 11, the reference voltage line 11A and the thin light shielding layers 5A.

In a step 2, the transparent insulating layer 2 is deposited on the structure.

In a step 3, the intrinsic amorphous Si active region 13 of the TFT is formed.

In a step 4, the transparent display electrode 3, such as ITO, is formed on the structure.

In a step 5, the metal data line 10, the drain (D) and source (S) electrodes of the TFT are formed.

In a step 6, the thick black photoresist layer 4 of low transmittance is formed to expose the display area of the display electrode 3.

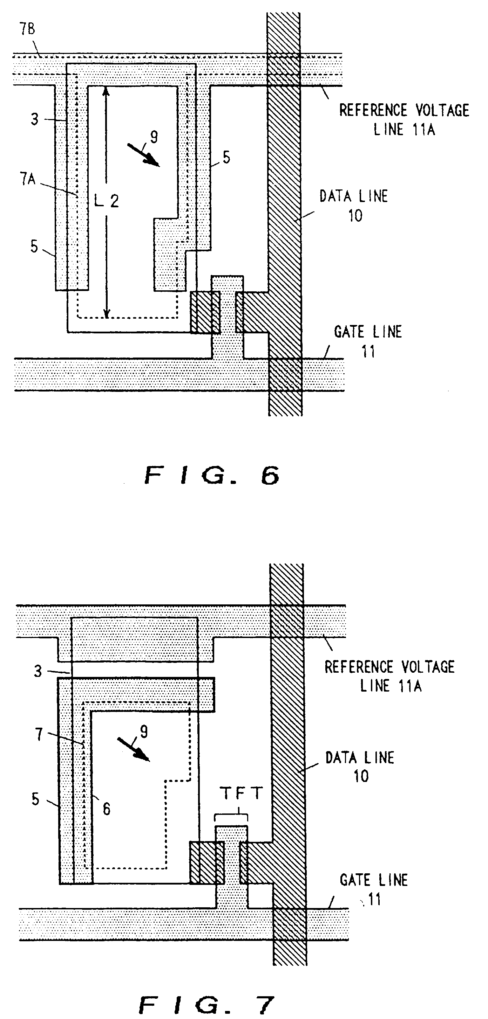

Fig.5 shows third embodiment of the present invention, wherein the thin light shielding layer 5 of the edge of the aperture is formed by four portions, i.e. portions 5A, 5B, 5C and 5D. The portions 5A and 5C are formed by the metal of the gate line 11, and the portions 5B and 5D are formed by the metal of the data line 10. The arrow 9 shows the rubbing direction.

Fig.6 shows fourth embodiment of the present invention, wherein the reference voltage line 11A is commonly used as the upper horizontal portion of the thin light shielding layer 5, and the left and right vertical portions of the thin light shielding layer 5 are extended from the upper horizontal portion. The reference voltage line 11A is simultaneously formed with the gate line 11. In other words, the reference voltage line 11A, i.e. the thin light shielding layer 5, is made of the metal of the gate line 11. As described hereinbefore with refer to the Figs. 2 and 3, the reference voltage line 11A which overlaps with the display electrode 3 operates as one electrode of the storage capacitor CS. In the embodiments shown in the Fig.2, Fig.4, Fig.5 and Fig.7, the width of the portion of the reference voltage line 11A overlapping with the display electrode 3 is wider than that of the remaining portion.

In the embodiment shown in the Fig.6, the left and right vertical portions of the thin light shielding layer 5 are used as the one electrode of the storage capacitor CS, whereby the width of the reference voltage line 11A overlapping with the top portion of the display electrode 3 can be reduced. For the above reasons, the length L2 of the aperture, i.e. the display area of the display electrode 3, is longer than that of another embodiments, whereby a large aperture ratio of the display cell is realized. And, the edge 7A of the thick black photoresist layer 4 is separated or discontinued from the edge 7B of the thick black photoresist layer above the reference line 11A, so that reverse tilt occurring along the vertical edge 7A can be separated or discontinued from reverse tilt occurring along the horizontal edge 7B, whereby the oblique reverse tilt as shown by a portion A in the Fig.8 is completely prevented. The arrow 9 shows the rubbing direction.

Fig.7 shows fifth embodiment of the present invention, wherein the thin light shielding layer 5 is formed only at the upper stream of the rubbing direction 9. That is, the thin light shielding layer 5 is provided at the top edge and the leftside edge of the aperture of the display electrode 3. The thin light shielding layer 5 is made of the metal of the gate line 10. However, the thin light shielding layer 5 can be also made of the metal of the data line 10.

The negative photoresist layer, i.e. transparent organic material comprises:

| | |
|---|---|
| binder polymer | 300g |
| monomer | 165g |
| initiator | 10g |
| inhibitor | 80mg |
| solvent | 2750g |

The following kinds of pigments are dispersed in the negative transparent photoresist to provide black colored negative photoresist operating as the light shielding layer.

The pigments are red pigments, such as dianthraquinone, blue pigments, such as Cu-phthalocyanine, yellow pigments, such as isoindolin, and violet pigments, such as dioxazine. These pigments are mixed to provide the black colored negative photoresist.
The combinations of the pigments to provide the black color are, as follows.

| | Example 1 | Example 2 |
|---|---|---|
| Red pigments | 5 w% | --- |
| Blue pigments | 35 w% | 20 w% |
| Yellow pigments | 40 w% | 20 w% |
| Violet pigments | 20 w% | 60 w% |

The pigments are dispersed into the negative photoresist to provide the black colored light shielding layer which indicates an optical density equal to or larger than 1.5.

The optical density is determined by a thickness of the layer and weight % of the pigments dispersed in the layer. The light shielding layer 4 used in the embodiments described hereinbefore has a thickness of 2µm, and a weight % of the pigments dispersed in the layer 4 is 36 weight %, to provide the optical density of 2.0.

It has been found by the inventors of the present invention that value 1.5 of the optical density is the minimum value required to provide a required contrast of the displayed image. If the optical density is smaller than 1.5, the light passes to the thin film transistor through the layer 4, so that a voltage-transmittance characteristic of the liquid crystal display cell is shifted and the display quality is degraded.

The combinations of the thickness of the light shielding layer 4 and the weight % of the pigments dispersed in the layer 4 to provide the optical density of 1.5 are, as follows.

| Thickness (µm) | Weight % | Optical density |
|---|---|---|
| 0.8 | 67.5 | 1.5 |
| 0.9 | 60.0 | 1.5 |
| 1.0 | 54.0 | 1.5 |
| 1.1 | 49.0 | 1.5 |
| 1.5 | 36.0 | 1.5 |
| 2.0 | 27.0 | 1.5 |
| 2.5 | 21.6 | 1.5 |

## Claims

1. A liquid crystal display device comprising first and second transparent insulating substrates and liquid crystal material retained therebetween;
said first substrate having a common electrode formed thereon;
said second transparent insulating substrate (1) having formed thereon gate lines (11) in a first direction, data lines (10) in a second direction intersecting said first direction, an array of thin film transistors (TFT) and display electrodes (3), one thin film transistor (TFT) and one display electrode (3) being located at each crosspoint of said gate and data lines, a light shielding structure (4) apertured to expose a display area at each display electrode, and an orientating layer which is rubbed in a rubbing direction;
said device being characterised in that
at each display area said light shielding structure comprises a thick layer and a thin layer, said thick layer being of a thickness that causes reverse tilt of the liquid crystal molecules located at a corresponding step formed in the orientating layer at an edge of said thick layer, said thin layer being of a thickness sufficiently thin so as to avoid causing reverse tilt of the liquid crystal molecules located at a corresponding step formed in the orientating layer at an edge of said thin layer, said thin layer being formed at an edge of the display electrode upstream of the rubbing direction (9) of said device to define a boundary (6) of the aperture, said thick layer being formed on part of said thin layer and spaced from said boundary such that the remaining part of said thin layer can block light from liquid crystal molecules located above it which have been reverse tilted at said edge due to the thick layer.

2. A device as claimed in claim 1 wherein said thin light Shielding layer has a thickness equal to or less than 0.5 µm.

3. A device as claimed in claim 1 or claim 2, wherein said thin light shielding layer is a metal layer and said thick light shielding layer is a black colored photoresist layer.

4. A device as claimed in claim 3, wherein said metal layer is formed from the metal layer used for said gate line.

5. A device as claimed in claim 3, wherein said metal layer is formed from the metal layer used for said data lines.

6. A device as claimed in claim 3, wherein said photoresist layer includes blue pigments, yellow pigments and violet pigments.

7. A device as claimed in claim 3, wherein said photoresist layer including red pigments, blue pigments, yellow pigments and violet pigments.

8. A device as claimed in any preceding claim in which both the upstream and downstream edges of said display electrode have thin light shielding layers formed thereon, the thick layer being formed on said thin layer at the downstream edge at a spacing from the aperture boundary similar to that of the thick layer at the upstream edge.

## Patentansprüche

1. Flüssigkristall-Anzeigevorrichtung, die ein erstes und ein zweites transparentes, isolierendes Substrat und ein dazwischen aufgenommenes Flüssigkristallmaterial beinhaltet;
wobei das erste Susbtrat eine darauf ausgebildete gemeinsame Elektrode besitzt;
wobei das zweite transparente, isolierende Substrat (1) darauf ausgebildete Gate-Leitungen (11) in einer ersten Richtung, Datenleitungen (10) in einer zweiten Richtung, welche die erste Richtung schneidet, ein Feld von Dünnfilmtransistoren (TFT) und Anzeige-Elektroden (3), wobei ein Dünnfilmtransistor (TFT) und eine Anzeige-Elektrode (3) an jedem Kreuzungspunkt der Gate- und Datenleitungen angeordnet sind, eine lichtabschirmende Struktur (4), die mit Öffnungen versehen ist, um eine Anzeigefläche bei jeder Anzeige-Elektrode freizulegen, und eine orientierende Schicht aufweist, die in einer Reibrichtung gerieben wird;
wobei die Vorrichtung dadurch gekennzeichnet ist, daß
die lichtabschirmende Struktur bei jeder Anzeigefläche eine dicke Schicht und eine dünne Schicht beinhaltet, wobei die dicke Schicht eine Dicke aufweist, die eine Kippung der Flüssigkristallmoleküle in Umkehrrichtung bewirkt, die sich an einer entsprechenden, in der orientierenden Schicht an einer Kante der dicken Schicht ausgebildeten Stufe befinden, wobei die dünne Schicht eine Dicke aufweist, die ausreichend dünn ist, so daß vermieden wird, daß eine Kippung der Flüssigkristallmoleküle in Umkehrrichtung bewirkt wird, die sich an einer entsprechenden, in der orientierenden Schicht an der Kante der dünnen Schicht ausgebildeten Stufe befinden, wobei die dünne Schicht an einer Kante der Anzeige-Elektrode aufwärts der Reibrichtung (9) der Vorrichtung ausgebildet ist, um eine Grenze (6) der Öffnung zu definieren, wobei die dicke Schicht auf einem Teil der dünnen Schicht ausgebildet und von der Grenze beabstandet ist, so daß der verbleibende Teil der dünnen Schicht Licht von denjenigen Flüssigkristallmolekülen abhalten kann, die sich über ihm befinden und die an der Kante aufgrund der dicken Schicht in die umgekehrte Richtung gekippt worden sind.

2. Vorrichtung, wie in Anspruch 1 beansprucht, wobei die dünne lichtabschirmende Schicht eine Dicke gleich oder weniger als 0,5 um aufweist.

3. Vorrichtung, wie in Anspruch 1 oder Anspruch 2 beansprucht, wobei die dünne lichtabschirmende Schicht eine Metallschicht ist und die dicke lichtabschirmende Schicht eine schwarz gefärbte Photoresistschicht ist.

4. Vorrichtung, wie in Anspruch 3 beansprucht, wobei die Metallschicht aus der für die Gate-Leitung verwendeten Metallschicht gebildet ist.

5. Vorrichtung, wie in Anspruch 3 beansprucht, wobei die Metallschicht aus der für die Datenleitungen verwendeten Metallschicht gebildet ist.

6. Vorrichtung, wie in Anspruch 3 beansprucht, wobei die Photoresistschicht blaue Pigmente, gelbe Pigmente und violette Pigmente beinhaltet.

7. Vorrichtung, wie in Anspruch 3 beansprucht, wobei die Photoresistschicht rote Pigmente, blaue Pigmente, gelbe Pigmente und violette Pigmente beinhaltet.

8. Vorrichtung, wie in irgendeinem vorhergehenden Anspruch beansprucht, bei der sowohl die aufwärts als auch die abwärts gelegene Kante der Anzeige-Elektrode darauf ausgebildete, dünne lichtabschirmende Schichten aufweisen, wobei die dicke Schicht auf der dünnen Schicht an der abwärts gelegenen Kante in einem Abstand von der Grenze der Öffnung ausgebildet ist, der ähnlich jenem der dicken Schicht an der aufwärts gelegenen Kante ist.

## Revendications

1. Dispositif d'affichage à cristaux liquides comprenant des premier et second substrats isolants transparents et un matériau de cristal liquide maintenu entre ceux-ci,
ledit premier substrat comportant une électrode commune formée sur celui-ci,
ledit second substrat isolant transparent (1) comportant, formées sur celui-ci, des lignes de grilles (11) dans une première direction, des lignes de données (10) dans une seconde direction recoupant ladite première direction, un réseau de transistors à couches minces (TFT) et d'électrodes d'affichage (3), un transitor à couches minces (TFT) et une électrode d'affichage (3) étant situés à chaque point de croisement desdites lignes de grilles et de données, une structure de masquage de lumière (4) comportant des ouvertures pour exposer une zone d'affichage au niveau de chaque électrode d'affichage, et une couche d'orientation qui est polie dans une direction de polissage,
ledit dispositif étant caractérisé en ce que
au niveau de chaque zone d'affichage, ladite structure de masquage de lumière comprend une couche épaisse et une couche mince, ladite couche épaisse étant d'une épaisseur telle qu'elle provoque le basculement inverse des molécules de cristaux liquides localisées au niveau d'un échelon correspondant formé dans la couche d'orientation au niveau d'un bord de ladite couche épaisse, ladite couche mince étant d'une épaisseur suffisamment mince pour éviter de provoquer le basculement inverse des molécules de cristaux liquides localisées au niveau d'un échelon correspondant formé dans la couche d'orientation au niveau d'un bord de ladite couche mince, ladite couche mince étant formée au niveau d'un bord de l'électrode d'affichage en amont de la direction de polissage (9) dudit dispositif afin de définir une limite (6) de l'ouverture, ladite couche épaisse étant formée sur une partie de ladite couche mince et espacée de ladite limite de sorte que la partie restante de ladite couche mince puisse bloquer la lumière provenant des molécules de cristaux liquides localisées au-dessus de celle-ci, qui ont été basculées en inversion au niveau dudit bord en raison de la couche épaisse.

2. Dispositif selon la revendication 1, dans lequel ladite couche mince de masquage de lumière présente une épaisseur inférieure ou égale à 0,5 µm.

3. Dispositif selon la revendication 1 ou la revendication 2, dans lequel ladite couche mince de masquage de lumière est une couche métallique et ladite couche épaisse de masquage de lumière est une couche de résine photosensible colorée en noir.

4. Dispositif selon la revendication 3, dans lequel ladite couche métallique est formée à partir de la couche métallique qui est utilisée pour ladite ligne de grilles.

5. Dispositif selon la revendication 3, dans lequel ladite couche métallique est formée à partir de la couche métallique qui est utilisée pour lesdites lignes de données.

6. Dispositif selon la revendication 3, dans lequel ladite couche de résine photosensible comprend des pigments bleus, des pigments jaunes et des pigments violets.

7. Dispositif selon la revendication 3, dans lequel ladite couche de résine photosensible comprend des pigments rouges, des pigments bleus, des pigments jaunes et des pigments violets.

8. Dispositif selon l'une quelconque des revendications précédentes, dans lequel à la fois les bords amont et aval de ladite électrode d'affichage comportent des couches minces de masquage de lumière formées sur ceux-ci, la couche épaisse étant formée sur ladite couche mince au niveau du bord aval suivant un espacement, par rapport à la limite de l'ouverture, similaire à celui de la couche épaisse au niveau du bord amont.
